# EUROPÄISCHE PATENTSCHRIFT

(11) **EP 1 082 844 B1**
(45) Veröffentlichungstag und Bekanntmachung des Hinweises auf die Patenterteilung: **01.08.2007**
(21) Anmeldenummer: 99910288.2
(22) Anmeldetag: 26.02.1999
(51) Int. Cl.: H04L 12/56, H04Q 11/04

(54) **VERFAHREN ZUM ENTFERNEN VON ATM-ZELLEN AUS EINER ATM-KOMMUNIKATIONSEINRICHTUNG**
METHOD FOR REMOVING ATM CELLS FROM AN ATM COMMUNICATIONS DEVICE
PROCEDE POUR ELIMINER DES CELLULES ATM D'UN DISPOSITIF DE COMMUNICATION ATM

(30) Priorität: 29.05.1998 EP 98109877
(43) Veröffentlichungstag der Anmeldung: 14.03.2001
(73) Patentinhaber: SIEMENS AKTIENGESELLSCHAFT, 80333 München (DE)
(72) Erfinder: HEISS, Herbert, D-82008 Unterhaching (DE); THUDT, Raimar, D-80995 München (DE)
(86) Internationale Anmeldenummer: PCT/EP1999/001242
(87) Internationale Veröffentlichungsnummer: WO 1999/063715

(56) Entgegenhaltungen:
- EP-A- 0 596 200
- EP-A- 0 744 850
- WO-A-96/29806
- ROMANOW A ET AL: "DYNAMICS OF TCP TRAFFIC OVER ATM NETWORKS" IEEE JOURNAL ON SELECTED AREAS IN COMMUNICATIONS, Bd. 13, Nr. 4, 1. Mai 1995, Seiten 633-641, XP000501259

## Beschreibung

Die Erfindung betrifft ein Verfahren gemäß dem Oberbegriff von Patentanspruch 1.

Bei herkömmlichen Paket-Kommunikationssystemen weist ein Paket eine vergleichsweise große und variable Länge auf. Ein System zur Übertragung von Informationen in Paketen mit festen, vorgegebenen Längen wird als ATM (Asynchronous Transfer Mode)-System bezeichnet. Mit einem solchen System lassen sich Sprach-, Video- und Datensignale auf die gleiche Weise verarbeiten und übertragen. Die einzelnen Pakete werden üblicherweise Zellen genannt. In den Zellen ist jeweils ein Zellenkopf enthalten, dessen Information eine Vermittlung bzw. Zuordnung der jeweiligen Zelle ermöglicht. In ATM-Kommunikationseinrichtungen, insbesondere Kommunikationsnetzeinrichtungen, ist eine Hochgeschwindigkeits- und Breitband-Übertragung mit einer Übertragungsrate von mehr als 150 Mb/s möglich.

Ein Problem bei ATM-Kommunikationseinrichtungen ist die Höhe der Übertragungsrate auf einer Übertragungsstrecke, wenn sich dort ein Stau von ATM-Zellen gebildet hat. Diese Problematik wird in der deutschen Patentanmeldung 19810058.2 detailliert beschrieben. Dort werden ATM-Systeme angesprochen, in denen ATM-Zellen jeweils zu mehreren einem gemeinsamen Rahmen zugeordnet sind. Bei diesen Rahmen handelt es sich im engeren Sinne um Datenpakete mit variabler Länge. Wenn beispielsweise eine Zelle eines solchen Rahmens verloren gegangen oder beschädigt worden ist, ist es unerwünscht,daß die verbleibenden Zellen desselben Rahmens über eine Übertragungsstrecke einer ATM-Einrichtung weiter übertragen werden, da nicht mehr die vollständige Information des Rahmens am Ende der Übertragungsstrecke ankommen würde. Das ATM-System wäre damit unnötigerweise dynamisch belastet. Insbesondere bei einem Stau auf der Übertragungsstrecke kommt es daher darauf an, die verbleibenden Zellen des Rahmens möglichst schnell und effektiv zu entfernen.

Es ist daher vorgeschlagen worden,ATM-Zellen eines bestimmten Rahmens jeweils beim Eintreffen einer einzelnen ATM-Zelle am Ende einer Warteschlange zu entfernen. Solche Warteschlangen dienen insbesondere der Verwaltung einer Reihenfolge von ATM-Zellen am Ende und/oder am Anfang einer Übertragungsstrecke. Gemäß einem in der oben genannten Patentanmeldung beschriebenen Verfahren, das als Partial Packet Discard (im folgenden PPD) bezeichnet wird, werden die erste und, falls vorhanden, weitere Zellen des Rahmens, die sich bereits in der Warteschlange befinden, nicht entfernt, sondern lediglich alle neu eintreffenden Zellen des Rahmens, mit Ausnahme der letzten Zelle des Rahmens. Das PPD Verfahren hat den Nachteil, daß zumindest die erste und die letzte Zelle des Rahmens weiterhin in der Warteschlange verbleiben müssen.

Aus der oben genannten Patentanmeldung ist ein weiteres Verfahren bekannt, gemäß dem alle Zellen eines Rahmens, von der ersten bis zur letzten Zelle beim Eintreffen in eine Warteschlange aus der ATM-Kommunikationseinrichtung entfernt werden. Dieses Early Packet Discard (im folgenden EPD) genannte Verfahren hat den Vorteil, daß keine Restzellen eines beschädigten oder aus anderen Gründen zu entfernenden Rahmens übrigbleiben und somit der maximal mögliche Platz für andere ATM-Zellen zur Verfügung steht. Das EPD Verfahren ist jedoch nicht auf Rahmen anwendbar, deren erste Zelle bereits der Warteschlage hinzugefügt worden ist.

Die Übertragung von Informationen im Internet ist ein Beispiel für Kommunikationsnetze, über die Informationen in Paketen mit vergleichsweiser großer und variabler Länge übertragen werden. Hier wird das Internet-Protokoll TCP/IP verwendet, das die Übertragung von Rahmen mit variabler Länge unterstützt. In der Praxis weisen diese Netze eine Schnittstelle zu ATM-Netzen auf. Aus diesem Grunde müssen die in Datenpaketen enthaltenen Informationen in ATM-Zellen umgesetzt werden und umgekehrt.

Hierzu wird beispielsweise ein Rahmen-Anfangskennwert gespeichert, das die der ersten ATM-Zelle des Rahmens unmittelbar vorgeordnete ATM-Zelle in der Warteschlange bezeichnet. Diese Information ist üblicherweise im Zellenkopf der letzten Zelle des Rahmens vorhanden, nämlich in der Regel in dem sogenannten AAU-Bit in dem Zellentypfeld (payload type field) des Zellenkopfes. Weiterhin wird eine Numerierung der ATM-Zellen vorgenommen, so daß letztendlich die Mehrzahl der ATM-Zellen einem Datenpaket zuordenbar ist.

In der deutschen Patentanmeldung 198 100 58.2 wird ein weiteres Verfahren beschrieben, wie ATM-Zellen beim Auftreten von Überlastsituationen in einem Rahmens entfernt werden können. Dieses Verfahren, das auch als LPD-Verfahren bezeichnet wird, ist insbesondere dann nützlich, wenn entschieden wird, den zweiten Teil des Rahmens zu verwerfen, während der erste Teil noch sich in der Warteschlange des ATM-Systems befindet. In diesem Fall wird der erste Teil des Rahmens aus der Warteschlange entfernt und die verbleibenden Zellen werden wie im Falle des EPD Verfahrens behandelt. Beim LPD-Verfahren treten immer dann Probleme auf, wenn Zellen abgespeichert werden, die im engeren Sinne nicht dem Rahmen zuzuordnen sind.

Bei diesen Zellen handelt es sich beispielsweise um Steuerzellen, OAM-Zellen oder Überwachungszellen allgemeiner Art, die gegebenenfalls teilnehmerseitig eingefügt werden. Sind diese Zellen in einer Warteschlange abgespeichert, kann im Überlastfall der betreffende Rahmen nicht mehr oder nur schwer verworfen werden.

Aus der Druckschrift Romanow A. et al: "Dynamics of TCP Traffic over ATM Networks" ist ein Verfahren zum Entfernen von ATM-Zellen aus einer ATM-Kommunikationseinrichtung bekannt. Hierbei werden die bereits angesprochenen Verfahren wie Partial Packet Discard oder Early Packet Discard beschrieben. Wie aber im Überlastfall ATM-Zellen effizient verworfen werden, ist hier nicht angesprochen.

Der Erfindung liegt die Aufgabe zugrunde, einen Weg aufzuzeigen, wie einem Rahmen nicht zugehörige Zellen im Überlastfall zu behandeln sind.

Vorteilhaft an der Erfindung ist insbesondere, daß Regeln aufgestellt werden, daß mittels denen die nicht einem Rahmen zugehörigen Zellen in der Warteschlange noch mitaufgenommen werden. Damit ist dann sichergestellt, daß diese bei Anwendung des LPD-Verfahrens nicht verworfen werden. Die Anwendung des PPD-Verfahrens wird minimiert.

Vorteilhafte Ausbildungen der Erfindung sind in den Unteransprüchen vorgesehen.

Die Erfindung wird im folgenden anhand eines Ausführungsbeispiels näher erläutert.

Es zeigen:
- Fig. 1: den ersten Teil des Algorithmus, der die Zellen bei Zellenankunft behandelt,
- Fig. 2: den zweiten Teil des Algorithmus, der eine Entscheidungsfunktion beschreibt, nach deren Maßgabe die Zellen verworfen werden.

Die Erfindung geht von der Voraussetzung aus, daß ATM-Zellen den Warteschlangen einer ATM-Kommunikationseinrichtung zugeführt werden. Einige der Zellen werden verworfen, während die verbleibenden Zellen die Warteschlangen zu einem späteren Zeitpunkt verlassen. Für jede Verbindung existiert eine bestimmte maximale Rahmengröße MFS, die in Zellen gemessen wird, und die von der Verbindung abhängt. Weiterhin wird davon ausgegangen, daß das CLP-Bit im Zellentypfeld (payload type field) des Zellenkopfes der ATM-Zelle im ATM-Knoten ausgewertet wird. Der Anwender kann Informationen in hochprioren und niederprioren Rahmen senden. Die Zellen der hochprioren Rahmen weisen CLP = 0 auf (nicht markiert), während die Zellen mit niederprioren Rahmen CLP = 1 (markiert) aufweisen.

Bei allen in Betracht gezogenen Verbindungen wird davon ausgegangen, daß die zugehörigen Zellen in Rahmen organisiert sind, wobei das AAU-Bit im Pay-Load-Typ-Feld des Headers der letzten Zelle des Rahmens gesetzt ist. Weiterhin sollen alle in Warteschlangen gespeicherte ATM-Zellen warteschlangenspezifische Markierungen QID aufweisen, wobei die Warteschlangen selbst verbindungsspezifisch organisiert sind. Die Warteschlangen sind als FIFO-Warteschlange sind in Form einer einer geordneten Liste von ATM-Zellen ausgebildet.

Im folgenden soll die Datenstruktur der Warteschlangen, der globalen Konstanten und der globalen Variablen definiert werden. Zunächst werden einzelne Operationen vorgestellt, die an den Zellen ausgeführt werden können. Es wird angenommen, daß jede der Zellen eine eindeutige Kennung besitzt, die mit P_cell bezeichnet wird. Die Operationen sind sind im einzelnen:

### Zellen-Operationen:

Die folgenden Operationen werden mit ATM-Zellen durchgeführt, denen eine gültige Zellenidentifikationsnummer P_cell zugeordnet ist. Hierbei gilt:
- end_of_frame(P_cell): wird auf den Wert TRUE gesetzt, wenn das Ende des Rahmens erreicht ist, andernfalls wird diese Variable auf den Wert FALSE gesetzt
- exclude_cell(P_cell): wird auf den Wert TRUE für die Zellen gesetzt, die vom Verwerfen des Rahmens ausgeschlossen sind
- Discard_cell(P_cell): verwirft Zellen mit der Identifikations-nummer P_cell
- Decide_cell (P_cell): bezeichnet den Algorithmus wie er weiter unten näher erläutert wird.

### Operationen der Warteschlangen-Datenstruktur:

Die folgenden Operationen können in der Warteschlange ausgeführt werden:
- append_cell (P_cell): fügt die Identifikationsnummer P_cell am Ende einer Warteschlange ein
- remove-last-frame: der LPD-Algorithmus verwirft alle Zellen des in Frage kommenden Rahmens die Variable gibt den Wert TRUE zurück, wenn der LPD-Algorithmus auf die Verbindung anwendbar ist, andernfalls den Wert FALSE.

### Operation im Pufferinhalt:

Die folgenden Operationen können im Pufferinhalt durchgeführt werden:
- Buffer_check_0: gibt den Wert TRUE zurück, wenn der Pufferinhalt anzeigt, daß hochpriore Rahmen (CLP = 0) verworfen werden sollen andernfalls wird FALSE zurückgegeben
- Buffer_check_1: gibt den Wert TRUE zurück, wenn der Pufferinhalt anzeigt, daß niederpriore Rahmen (CLP = 1) verworfen werden sollen andernfalls wird FALSE zurückgegeben

### Datenstrukturen einer Warteschlange:

Für jede Verbindung und der dieser zugeordnete Warteschlange gibt es eine Identifikationsnummer QID. Damit werden folgende Daten gespeichert:
- Anzeige ob die Variable "full packet discard" sich auf die Zellen des gegenwärtigen Rahmens (FPD_flag) anwenden läßt. Dies ist gleichbedeutend mit der Aussage, daß der LPD- oder EPD-Algorithmus angewendet wird.
- Anzeige, ob PPD-Algorithmus auf die Zellen des gegenwärtigen Rahmens (PPD_flag) angewendet wird.
- die Variable "logical queue length" bezeichnet einen Zellen-Zähler der die gegenwärtige Anzahl der Zellen in der Warteschlange angibt.
- die Variable S_EPD_0 bezeichnet die feste Schwelle einer Warteschlange für die Anwendung des EPD-Algorithmus auf niederpriore Zellen
- die Variable MFS bezeichnet die maximale Rahmengröße
- die Variable Current_frame_length bezeichnet einen Zellenzähler, der für die nicht verworfenen Zellen der Verbindung um 1 erhöht wird, die nicht vom Verwerfen des Rahmens ausgeschlossen sind. Die Variable wird zurückgesetzt bei Eintreffen der letzten Zelle eines Rahmens oder nachdem das LPD-Verfahren angewendet wurde.
- die Variable N exclusion credits bezeichnet das aktuelle Maß an Speicherplatz für die nicht zu verwerfenden Zellen ( = N_exclusion_cells_max - Anzahl der Ausschlußzellen in der Warteschlange).

### Globale Konstanten:

Folgende globale Konstanten werden verwendet:
- die Konstante S_PPD_0 bezeichnet eine feste obere Grenze der Warteschlange (für alle QID's)
- die Konstante S_EPD_1 bezeichnet die feste Schwelle für early packet discard für CLP1 Zellen (für alle QID's)
In anderen Varianten des Algorithmus können die globalen Konstanten verschieden sein für verschiedene Gruppen von Verbindungen oder sie können verbindungsspezifisch sein.

Folgende Anfangswerte werden zugewiesen:
FPD_flag = FALSE
PPD_flag = FALSE
Current_frame_length = 0
N_exclusion_credits = N_exclusion_cells_max

Weiterhin gelten die folgenden Beziehungen für die obengenannten Konstanten:
S_EPD_1>0
S_PPD_1=S_EPD_1+MFS1
S_EPD_0>S PPD 1
S_PPD_0>S_EPD_0+MFS1, wobei
MFS1 = MFS + N_exclusion_cells_max gilt.

Im folgenden wird das erfindungsgemäße Verfahren beschrieben. Das erfindungsgemäße Verfahren weist zwei Anteile auf. Im ersten Teil gelangt der Algorithmus bei Zellenankunft zum Ablauf während im zweiten Teil ein Entscheidungsalgorithmus zum Verwerfen der Rahmen beschrieben wird.

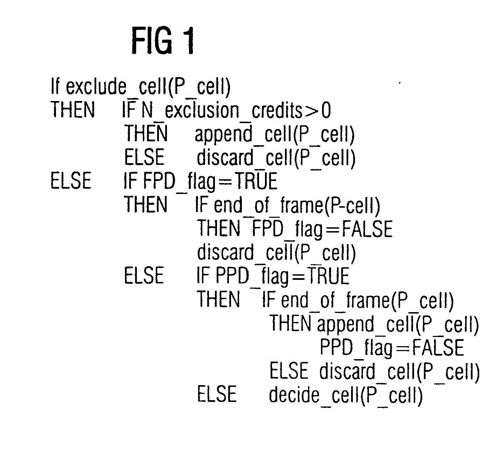

In Fig. 1 wird der Algorithmus bei Zellenankunft beschrieben. Er wird dann ausgeführt, wenn eine einer Verbindung i zugehötige Zelle durch die Variable P_cell erkannt wird. Wenn eine ankommende Zelle einer Gruppe von Zellen zugehörig ist, die vom Verwerfen des Rahmens ausgeschlossen sind, wird diese Zelle zunächst in die Warteschlange aufgenommen, wenn die derzeitige Anzahl der nicht zu verwerfenden Zellen in der Warteschlange kleiner ist als die maximale Anzahl der nicht zu verwerfenden Zellen, die durch die Warteschlange zugelassen werden, andernfalls werden sie verworfen.

Wenn die ankommende Zelle keine nicht zu verwerfende Zelle ist, wird das FPD_flag überprüft. Wenn das FPD_flag auf den Wert TRUE gesetzt worden ist, wird die Zelle verworfen und wenn die Zelle die letzte Zelle des Rahmens darstellt, wird das FPD-Verfahren nicht auf die als nächstes ankommende Zelle angewendet.

Wenn das FPD_flag auf FALSE gesetzt war, wird geprüft, ob das PPD-Verfahren auf den momentanen Rahmen angewandt wurde.Falls das PPD-Verfahren zum Ablauf gelangt, wird die Zelle verworfen, wenn sie nicht das Ende des Rahmens darstellt, andernfalls wird die Zelle in die Warteschlange übernommen und das PPD-Verfahren wird nicht auf die als nächstes ankommende Zelle angewendet. Wenn das PPD-Verfahren überhaupt nicht angewendet wird, können andere Entscheidungs-Algorithmen zur Anwendung gelangen. Diese resultieren dann entweder in der Anwendung der Funktion append_cell oder im Verwerfen der Zelle.

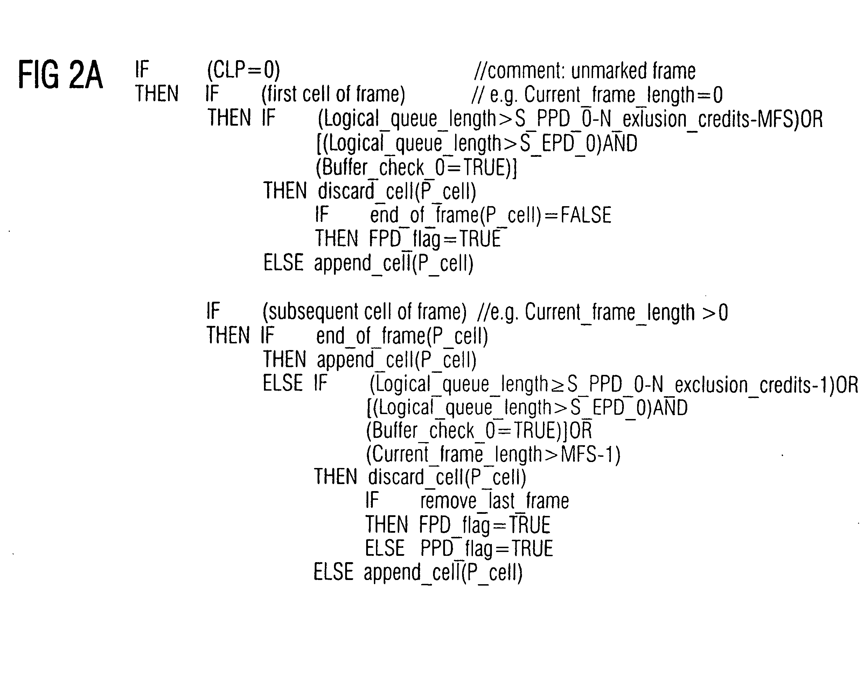

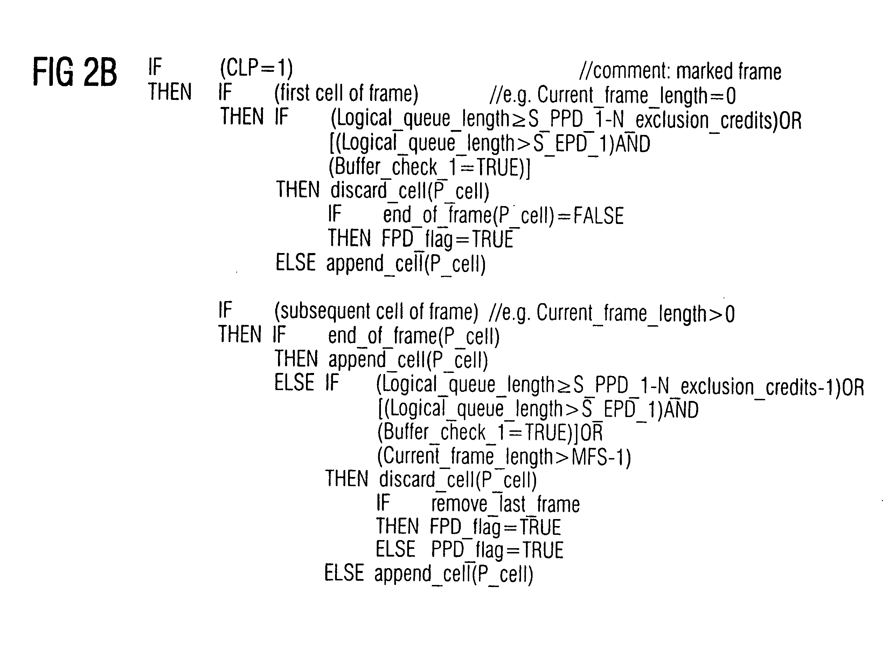

In Figur 2 ist der zweite Teil des Entscheidungs-Algorithmus aufgezeigt. Dabei wird zwischen niederprioren und hochprioren Zellen unterschieden. Für hochpriore Zellen, das heißt Zellen mit der Eigenschaft CLP = 0, ergibt sich:

Wenn die Zelle die erste Zelle des Rahmens ist, ist zu entscheiden, ob diese Zelle sowie die verbleibenden Zellen des Rahmens verworfen werden oder ob die Zelle in die Warteschlange aufgenommen wird. Gründe, den Rahmen zu verwerfen, können darin bestehen, daß die Warteschlange weniger Zellenspeicherplatz zur Verfügung hat als eine Größe MFS1, die sich aus der Summe der Größen MFS + N_exclusion_credits ergibt, oder daß die Länge der Warteschlange oberhalb der Schwelle EPD_0 liegt und der Pufferspeicher anzeigt,daß hochpriore Rahmen (CLP = 0) verworfen werden sollen.

Wenn die Zelle die einzige Zelle des Rahmens ist, ist sie damit automatisch die letzte Zelle des Rahmens und das FPD_flag wird nicht gesetzt, andernfalls wird es gesetzt.

Wenn die Zelle nicht die erste Zelle des Rahmens ist, sind eine oder mehrere Zellen des Rahmens in die Warteschlange aufgenommen worden, andernfalls würde die Funktion decide_cell nicht angewendet. Wenn sie die letzte Zelle des Rahmens ist, wird sie auf jeden Fall akzeptiert und sie wird in die Warteschlange mitaufgenommen. Wenn sie nicht die letzte Zelle des Rahmens ist, wird diese Zelle verworfen, wenn folgende Bedingung erfüllt ist:

Wenn höchstens 1 + N_exclusion_credits freier Zellenspeicherplatz in der Warteschlange verfügbar ist oder wenn die Länge der Warteschlange oberhalb der Schwelle EPD_0 ist und der Pufferspeicher anzeigt, daß hochpriore Rahmen verworfen werden sollten, oder wenn die Länge des Rahmens oberhalb der Variablen MFS-1 ist. Gründe für freien Zellenspeicherplatz in der Größenordnung von 1 + N_exclusion_credits können darin begründet sein, genügend Platz für die letzte Zelle des Rahmens und den möglichen Ausschluß von Zellen vorrätig zu halten. Gründe für freien Zellenspeicherplatz in der Größenordnung von MFS-1 können darin bestehen, daß die Zelle nicht die letzte Zelle des Rahmens ist, und im Falle daß der gegenwärtige Rahmen in seiner Länge den Wert MFS-1 überschreitet, der komplette Rahmen den Wert MFS überschreitet. Wenn die Zelle nicht verworfen wird, wird, wenn möglich, der erste Teil des Rahmens aus der Warterschlange entfernt und das FPD_ flag gesetzt. Andernfalls wird das PPD_flag gesetzt.

Für niederpriore Zellen, das heißt Zellen mit der Eigenschaft CLP = 1, sind die Aktionen ähnlicher Natur, aber die Schwellen werden entsprechend der Eigenschaft niederprior zu sein, angepaßt.

Die Variable Logical_queue_ length gibt die Länge der Warteschlange bei Zellankunft wieder, die Variablen current_frame_ length und N_exclusion_credits geben ebenfalls die Werte dieser Variablen bei Zellankunft wieder. Anfangs wird die Variable current_frame_length auf 0 gesetzt. Sie wird um 1 erhöht, wenn eine nicht zu verwerfende Zelle in die Warteschlange mit aufgenommen wird. Sie wird auf 0 gesetzt, wenn das Ende des Rahmens erscheint oder wenn der letzte Rahmen aus der Warteschlange durch den LPD-Algorithmus entfernt wurde. Die erste Zelle des Rahmens kann durch die Variable current_frame_length = 0 erkannt werden. Die Variable N_exclusion_credits wird zu Anfang auf N_exclusion_cell_max für jede Warteschlange gesetzt. Sie wird für diese Verbindung um 1 vermindert, wenn diese nicht zu verwerfende Zelle für die Verbindung in die Warteschlange mitaufgenommen wird. Sie wird um 1 erhöht, wenn eine nicht zu verwerfende Zelle aus der Warteschlange entnommen wird. Sie ist gleich der Variablen N_ exclusion_cell_max - Anzahl der nicht zu verwerfenden Zellen in der Warteschlange.

## Patentansprüche

1. Verfahren zum Entfernen von ATM-Zellen aus einer ATM-Kommunikationseinrichtung, mit
einer Mehrzahl von ATM-Zellen, die jeweils zu mehreren einem gemeinsamen Rahmen zugeordnet sind, und die in verbindungsspezifischen Warteschlangen gespeichert werden, und mit
einem ersten Algorithmus, PPD, mittels dem bis auf die erste und letzte ATM-Zelle eines Rahmens alle neu eintreffenden Zellen des Rahmens entfernt werden,
einem zweiten Algorithmus, EPD, mittels dem alle ATM-Zellen eines Rahmens, von der ersten bis zur letzten Zelle beim Eintreffen in eine Warteschlange aus der ATM-Kommunikationseinrichtung entfernt werden, und mit
einer Mehrzahl von ATM-Zellen, die als nicht dem Rahmen zugehörig definierbar sind,
**dadurch gekennzeichnet,**
**daß** ein Anwender zu Beginn des Übertragungsvorganges die maximale Anzahl der ATM-Zellen pro Rahmen, MFS angibt, mit der ATM-Zellen gesendet werden,
**daß** sichergestellt wird, daß die einem Rahmen nicht zugehörige Zellen in der Warteschlange noch mitaufgenommen werden, womit diese nicht verworfen werden,
**daß** im Falle, daß die maximale Anzahl der ATM-Zellen pro Rahmen, MFS, überschritten wird, der zugehörige Rahmen verworfen oder der erste Algorithmus, PPD, angewendet wird.

2. Verfahren nach Anspruch 1,
**dadurch gekennzeichnet,**
**daß** Zellen, die nicht als Rahmenzellen erkannt werden, vom Verwerfen ausgeschlossen werden.

3. Verfahren nach Anspruch 1 oder 2,
**dadurch gekennzeichnet,**
**daß** eine verbindungsspezifische Länge der Warteschlange definiert wird.

4. Verfahren nach Anspruch 1 bis 3,
**dadurch gekennzeichnet,**
**daß** eine konstante Größe, die ein Maß für die maximale Rahmengröße, MFS, ist, pro Verbindung definiert wird.

5. Verfahren nach einem der vorstehenden Ansprüche,
**dadurch gekennzeichnet,**
**daß** verbindungsindividuell die Anzahl der nicht zu verwerfenden Zellen benutzt wird, die für diese Verbindung seit dem letzten Ende des Rahmens für diese Verbindung angekommen ist.

6. Verfahren nach einem der vorstehenden Ansprüche,
**dadurch gekennzeichnet,**
**daß** die Anzahl der nicht zu verwerfenden Zellen, die in der Warteschlange zu einem bestimmten Zeitpunkt erlaubt sind, pro Warteschlange als eine von der Warteschlange unabhängig Größe begrenzt werden, N_exclusion_cells_max.

7. Verfahren nach einem der vorstehenden Ansprüche,
**dadurch gekennzeichnet,**
**daß** pro Verbindung die Anzahl der nicht zu verwerfenden Zellen berechnet wird, welche sich aus der Differenz zweier Zahlen, N_exclusion_cell_max minus der gegenwärtigen Anzahl der ausgeschlossenen Zellen, in der Warteschlange ergibt.

8. Verfahren nach einem der vorstehenden Ansprüche,
**dadurch gekennzeichnet,**
**daß** eine vorgegebene Anzahl von Zellenspeicherplatz pro Warteschlange, N_exclusion_cell_max für nicht zu verwerfende Zellen vorgehalten wird und anwenderbezogene Zellen nicht zu allen Warteschlangeplätzen Zugang haben.

9. Verfahren nach einem der vorstehenden Ansprüche,
**dadurch gekennzeichnet,**
**daß** keine hochprioren Zellen pro Verbindung gespeichert werden, wenn die Länge der Warteschlange für diese Verbindung gleich einem Wert S_PPD_0 ist, wobei dieser Wert S_PPD_0 unabhängig von der Verbindung ist.

10. Verfahren nach einem der vorstehenden Ansprüche,
**dadurch gekennzeichnet,**
**daß** im Falle, daß hochpriore Rahmen eine vorgegebene Länge nicht überschreiten, die Anwendung des ersten Algorithmus, PPD, für solche Rahmen vermieden wird.

11. Verfahren nach einem der vorstehenden Ansprüche,
**dadurch gekennzeichnet,**
**daß** eine bestimmte Größe an Pufferspeicherplatz für hochpriore Zellen pro Verbindung vorgehalten wird und daß niederpriore Zellen zu diesem Pufferspeicherplatz keinen Zugang haben.

12. Verfahren nach einem der vorstehenden Ansprüche,
**dadurch gekennzeichnet,**
**daß** keine hochprioren Zellen für eine Verbindung gespeichert werden, wenn die Länge der Warteschlange für diese Verbindung wenigstens einer weiteren Größe S_PPD_1 1 *=* S_EPD_1 + MFS + N_exclusion_cell_max ist, wobei S_EPD_1 und N_exclusion_cell max unabhängig von der Verbindung sind und MFS abhängig von der Verbindung ist.

13. Verfahren nach einem der vorstehenden Ansprüche,
**dadurch gekennzeichnet,**
**daß** hochpriore Rahmen komplett verworfen werden, wenn bei Ankunft der ersten Zelle dieser Verbindung mit weniger als MFS + N_exclusion_credits Zellenspeicherplatz in der logischen Warteschlange für diese Verbindung vorhanden ist oder die logische Warteschlange eine Schwelle S_EPD_0 überschreitet und die Pufferspeicherfüllung gleichzeitig anzeigt, daß hochpriore Rahmen verworfen werden sollen.

14. Verfahren nach einem der vorstehenden Ansprüche,
**dadurch gekennzeichnet,**
**daß** hochpriore Rahmen teilweise mit dem ersten Algorithmus, PPD , verworfen werden, wenn bei Ankunft einer Zelle, die weder die erste noch die letzte Zelle eines Rahmens ist, die logische Warteschlange lediglich Platz für höchstens 1+N_exclusion_credits_ cells oder die logische Warteschlange den verbindungsspezifischen Schwellenwert S_EPD_0 überschreitet und der Pufferspeicherstatus anzeigt, daß hochpriore Rahmen verworfen werden sollen oder wenn der Rahmen länger als MFS ist.

15. Verfahren nach einem der vorstehenden Ansprüche,
**dadurch gekennzeichnet,**
**daß** niederpriore Rahmen komplett verworfen werden, wenn bei Ankunft der ersten Zelle einer Verbindung die Länge der Warteschlange dieser Verbindung länger als ein Wert S PPD 1 minus N_exclusion_credits ist oder wenn die Länge der Warteschlange länger als ein Wert S_EPD_1 und der Pufferspeicherstatus anzeigt, daß niederpriore Rahmen verworfen werden sollen.

16. Verfahren nach einem der vorstehenden Ansprüche,
**dadurch gekennzeichnet,**
**daß** niederpriore Rahmen für eine Verbindung teilweise mit dem PPD-Verfahren verworfen werden sollen, wenn bei Ankunft einer Zelle, die weder die erste noch die letzte Zelle eines Rahmens ist, die Länge der Warteschlange für diese Verbindung größer als S_PPD_1 minus N_exclusion_credits minus 1 ist oder die Länge der Warteschlange größer als S_EPD_1 und der Status des Pufferspeichers anzeigt, daß niederpriore Rahmen verworfen werden sollen oder wenn der Rahmen länger als MFS ist.

17. Verfahren nach einem der vorstehenden Ansprüche,
**dadurch gekennzeichnet,**
**daß** der warteschlangenspezifische Wert S EPD 0 größer als S_PPD_1 und kleiner als PPD_0 - MFS - N_exclusion_cells max ist.

18. Verfahren nach einem der vorstehenden Ansprüche,
**dadurch gekennzeichnet,**
**daß** bei niedrigem Pufferfüllgrad hochpriore Rahmen, deren erste Zelle angenommen wurde und deren Rahmenlänge den Wert MFS nicht übersteigt, nicht dem ersten Algorithmus, PPD unterworfen werden.

19. Verfahren nach einem der vorstehenden Ansprüche,
**dadurch gekennzeichnet,**
**daß** bei niedrigem Pufferfüllgrad niederpriore Rahmen, deren erste Zelle angenommen wurde und deren Rahmenlänge MFS nicht übersteigt, nicht dem PPD-Verfahren unterworfen werden.

20. Verfahren nach einem der vorstehenden Ansprüche,
**dadurch gekennzeichnet,**
**daß** ein EPD_flag und ein FPD_flag nicht zugleich gesetzt werden.

## Claims

1. Method for removal of ATM cells from an ATM communication device, with
a plurality of ATM cells, which are each assigned to a number of frames of a common frame, and which are stored in connection-specific queues, and with a first algorithm, PPD, by means of which all newly arriving cells of the frame, except for the first and last ATM cell of a frame, are removed,
a second algorithm, EPD, by means of which all ATM cells of a frame, from the first to for last cell, are removed from the ATM communication device on arrival in a queue, and with a plurality of ATM cells which are able to be defined as not belonging to the frame,
**characterised in that**
a user specifies at the beginning of the transmission process the maximum number of ATM cells per frame, MFS, with which ATM cells will be sent,
it is ensured that the cells not belonging to a frame are not accepted into the queue, in which case these cells are not discarded,
in the case in which the maximum number of ATM cells per frame MFS is exceeded, the associated frame is discarded or the first algorithm, PPD, is applied.

2. Method according to claim 1,
**characterised in that**
cells which are not recognized as frame cells are excluded from being discarded.

3. Method according to claim 1 or 2,
**characterised in that**
a connection-specific length of the queue is defined

4. Method according to claim 1 to 3,
**characterised in that**
a constant size, which is a measure of the maximum frame size, MFS, is defined per connection.

5. Method according to one of the previous claims,
**characterised in that**
for each individual connection the number of not-to-be-discarded cells is used which has arrived for this connection since the last end of the frame for this connection.

6. Method according to one of the previous claims,
**characterised in that**
the number of not-to-be-discarded cells which is allowed in the queue at a specific point in time, is limited for each queue as a variable N_exclusion_cells_max independent of the queue.

7. Method according to one of the previous claims,
**characterised in that**
the number of not-to-be-discarded cells is calculated for each connection, said number being produced by the difference between two numbers, N_exclusion_cell_max minus the current number of excluded cells in the queue.

8. Method according to one of the previous claims,
**characterised in that**
a predetermined amount of cell storage space per queue, N_exclusion_cell_max is reserved for not-to-be-discarded cells and user-related cells do not have access to all queue locations.

9. Method according to one of the previous claims,
**characterised in that**
no high-priority cells are stored per connection if the length of the queue for this connection is equal to a value S_PPD_0, with this value S_PPD_0 being independent of the connection.

10. Method according to one of the previous claims,
**characterised in that**,
where high-priority frames do not exceed a predetermined length, the application of the first algorithm is avoided for such frames.

11. Method according to one of the previous claims,
**characterised in that**,
a specific size of buffer storage space is reserved for high-priority cells per connection and that low-priority cells have no access to this buffer storage space.

12. Method according to one of the previous claims,
**characterised in that**
no high-priority cells are stored for a connection if the length of the queue for this connection is at least a further variable S_PPD_1 = S_EPD1 + MFS + N_exclusion_cell_max is, with S_EPD_1>01 and N_exclusion_cell_max being independent of the connection and MFS being dependent on the connection.

13. Method according to one of the previous claims,
**characterised in that**,
high-priority frames are discarded completely, if on arrival of the first cell of this connection with less than MFS + N_exclusion_credits cell storage space in the logical queue for this connection is available or the logical queue exceeds a threshold value S EPD_0 and the buffer storage occupancy simultaneously shows that high-priority frames are to be discarded.

14. Method according to one of the previous claims,
**characterised in that**
high-priority frames are partly discarded with the first algorithm PPD, if on arrival of a cell which is neither the first nor the last cell of a frame, the logical queue only has space for a maximum of 1+N_exclusion_credits_cells or the logical queue exceeds the connection-specific threshold value S_EPD_0 and the buffer-store status indicates that high-priority frames are to be discarded, or if the frame length is longer than MFS.

15. Method according to one of the previous claims,
**characterised in that**
low-priority frames are completely discarded, if on arrival of the first cell of a connection, the length of the queue of this connection is longer than a value S_PPD_1 minus N_exclusion_credits or if the length of the queue is longer than a value S_EPD_1 and the buffer status indicates that low-priority frames are to be discarded.

16. Method according to one of the previous claims,
**characterised in that**
low-priority frames for a connection are to be partly discarded with the PPD method, if on arrival of a cell which is neither the first nor the last cell of a frame, the length of the queue for this connection is greater than S_PPD_1 minus N_exclusion_credits minus 1 or the length of the queue is greater than S_EPD_1 and the status of the buffer indicates that low-priority fames are to be discarded, or if the frame length is longer than MFS.

17. Method according to one of the previous claims,
**characterised in that**
the queue-specific value S_EPD_0 is greater than S PPD_1 and is less than S_PPD_0 - MFS - N_exclusion_cells_max.

18. Method according to one of the previous claims,
**characterised in that**
with a low buffer occupancy, high-priority frames, of which the first cell was accepted and of which the frame length does not exceed the value MFS, are not subject to the first algorithm, PPD.

19. Method according to one of the previous claims,
**characterised in that**
with a low buffer occupancy, low-priority frames, of which the first cell was accepted and of which the frame length does not exceed MFS, are not subject to the PPD method.

20. Method according to one of the previous claims,
**characterised in that**
an EPD_flag and an FPD_flag are not set simultaneously.

## Revendications

1. Procédé pour éliminer des cellules ATM d'un dispositif de communication ATM, comprenant
une pluralité de cellules ATM qui sont à chaque fois associées à plusieurs à une trame commune et qui sont stockées dans des files d'attente spécifiques à une connexion, et comprenant
un premier algorithme, PPD, au moyen duquel, à l'exception des première et dernière cellules ATM d'une trame, les nouvelles cellules arrivantes de la trame sont toutes éliminées,
un deuxième algorithme, EPD, au moyen duquel toutes les cellules ATM d'une trame, de la première jusqu'à la dernière, sont éliminées du dispositif de communication ATM lors de leur arrivée dans une file d'attente et comprenant
une pluralité de cellules ATM pouvant être définies comme n'appartenant pas à la trame,
**caractérisé en ce que**
un utilisateur indique, au début du processus de transmission, le nombre maximum de cellules ATM par trame, MFS,avec lequel des cellules ATM sont envoyées, on a la garantie que les cellules n'appartenant pas à une trame sont encore prises dans la file d'attente, grâce à quoi elles ne sont pas éliminées,
dans le cas où le nombre maximum de cellules ATM par trame, MFS, est dépassé, la trame correspondante est éliminée ou le premier algorithme, PPD, est appliqué.

2. Procédé selon la revendication 1, **caractérisé en ce que** les cellules qui ne sont pas reconnues en tant que cellules d'une trame sont exclues de l'élimination.

3. Procédé selon la revendication 1 ou 2, **caractérisé en ce qu'**une longueur de file d'attente spécifique à une connexion est définie.

4. Procédé selon les revendications 1 à 3, **caractérisé en ce qu'**une grandeur constante qui est une mesure pour la taille maximale de trame, MFS, est définie pour chaque connexion.

5. Procédé selon l'une des revendications précédentes, **caractérisé en ce que**, pour chaque connexion individuelle, on utilise le nombre des cellules non sujettes à l'élimination qui sont arrivées, pour cette connexion, depuis la fin de la dernière trame pour cette connexion.

6. Procédé selon l'une des revendications précédentes, **caractérisé en ce que** le nombre des cellules non sujettes à l'élimination qui sont autorisées dans la file d'attente à un instant déterminé est limité, pour chaque file d'attente, en tant que grandeur indépendante de la file d'attente, N_exclusion_cells_max.

7. Procédé selon l'une des revendications précédentes, **caractérisé en ce que** l'on calcule, pour chaque connexion, le nombre des cellules non sujettes à l'élimination, qui résulte de la différence de deux nombres, deux nombres N_exclusion_cells_max moins le nombre actuel des cellules exclues, dans la file d'attente.

8. Procédé selon l'une des revendications précédentes, **caractérisé en ce qu'**une quantité prédéfinie d'emplacement de mémoire pour cellules par file d'attente, N_exclusion_cells_max, est réservée pour des cellules non sujettes à l'élimination et des cellules relatives à un utilisateur n'ont pas accès à toutes les places de la file d'attente.

9. Procédé selon l'une des revendications précédentes, **caractérisé en ce qu'**aucune cellule haute priorité pour une connexion n'est stockée lorsque la longueur de la file d'attente pour cette connexion est égale à une valeur S_PPD_0, cette valeur S_PPD_0 étant indépendante de la connexion.

10. Procédé selon l'une des revendications précédentes, **caractérisé en ce**, dans le cas où des trames haute priorité ne dépassent pas une longueur prédéfinie, l'application du premier algorithme, PPD, à ces trames est évitée.

11. Procédé selon l'une des revendications précédentes, **caractérisé en ce qu'**une grandeur déterminée d'emplacement de mémoire tampon est réservée pour des cellules haute priorité pour chaque connexion et **en ce que** les cellules basse priorité n'ont pas accès à cet emplacement de mémoire tampon.

12. Procédé selon l'une des revendications précédentes, **caractérisé en ce qu'**aucune cellule haute priorité pour une connexion n'est stockée lorsque la longueur de la file d'attente pour cette connexion correspond à au moins une autre grandeur S_PPD_1 = S_EPD_1 + MFS + N_exclusion_cells_max, S_EPD_1 et N_exclusion_cells_max étant indépendantes de la connexion et MFS dépendant de la connexion.

13. Procédé selon l'une des revendications précédentes, **caractérisé en ce que** les trames haute priorité sont totalement éliminées lorsque, lors de l'arrivée de la première cellule de cette connexion, un emplacement de mémoire pour cellules inférieur à MFS + N_exclusion_credits est présent dans la file d'attente logique pour cette connexion ou lorsque la file d'attente logique dépasse un seuil S_EPD_0 et le contenu de la mémoire tampon indique simultanément que les trames haute priorité doivent être éliminées.

14. Procédé selon l'une des revendications précédentes, **caractérisé en ce que** les trames haute priorité sont partiellement éliminées avec le premier algorithme, PPD, lorsque, lors de l'arrivée d'une cellule qui n'est ni la première, ni la dernière cellule d'une trame, la file d'attente logique dispose seulement d'une place maximum de 1 + N_exclusion_credits ou la file d'attente logique dépasse la valeur seuil S_EPD_0 spécifique à une connexion et l'état de la mémoire tampon indique que les trames haute priorité doivent être éliminées, ou lorsque la longueur de la trame est supérieure à MFS.

15. Procédé selon l'une des revendications précédentes, **caractérisé en ce que** les trames basse priorité sont totalement éliminées lorsque, lors de l'arrivée de la première cellule d'une connexion, la longueur de la file d'attente de cette connexion est supérieure à une valeur S_PPD_1 moins N_exclusion_credits ou lorsque la longueur de la file d'attente est supérieure à une valeur S_EPD_1 et l'état de la mémoire tampon indique que les trames basse priorité doivent être éliminées.

16. Procédé selon l'une des revendications précédentes, **caractérisé en ce que** les trames basse priorité pour une connexion doivent être partiellement éliminées avec le procédé PPD lorsque, lors de l'arrivée d'une cellule qui n'est ni la première, ni la dernière cellule d'une trame, la longueur de la file d'attente pour cette connexion est supérieure à S_PPD_1 moins N_exclusion_credits moins 1 ou la longueur de la file d'attente est supérieure à S_EPD_1 et l'état de la mémoire tampon indique que les trames basse priorité doivent être éliminées, ou lorsque la longueur de la trame est supérieure à MFS.

17. Procédé selon l'une des revendications précédentes, **caractérisé en ce que** la valeur S_EPD_0 spécifique à une file d'attente est supérieure à S_PPD_1 et inférieure à PPD_0 moins MFS moins N_exclusion_cells_max.

18. Procédé selon l'une des revendications précédentes, **caractérisé en ce que**, lorsque le degré de remplissage de la mémoire tampon est faible, les trames haute priorité dont la première cellule a été prise et dont la longueur de trame ne dépasse pas la valeur MFS ne sont pas soumises au premier algorithme, PPD.

19. Procédé selon l'une des revendications précédentes, **caractérisé en ce que**, lorsque le degré de remplissage de la mémoire tampon est faible, les trames basse priorité dont la première cellule a été prise et dont la longueur de trame ne dépasse pas MFS ne sont pas soumises au procédé PPD.

20. Procédé selon l'une des revendications précédentes, **caractérisé en ce qu'**un drapeau EPD_flag et un drapeau FPD_flag ne sont pas mis simultanément.
